# EUROPÄISCHE PATENTSCHRIFT

(11) **EP 3 212 740 B1**
(45) Veröffentlichungstag und Bekanntmachung des Hinweises auf die Patenterteilung: **01.01.2020**
(21) Anmeldenummer: 15790488.9
(22) Anmeldetag: 23.10.2015
(51) Int. Cl.: C10K 1/00, C10K 1/04, C10K 1/08, C10K 1/18, B01D 53/14

(54) **REDUZIERUNG VON NAPHTHALIN IN KOKEREIGAS**
REDUCTION OF NAPHTHALENE IN COKE OVEN GAS
RÉDUCTION DU NAPHTALÈNE DANS UN GAZ DE COKERIE

(30) Priorität: 28.10.2014 DE 102014221952
(43) Veröffentlichungstag der Anmeldung: 06.09.2017
(73) Patentinhaber: thyssenkrupp Industrial Solutions AG, 45143 Essen (DE); thyssenkrupp AG, 45143 Essen (DE)
(72) Erfinder: THIELERT, Holger, 44379 Dortmund (DE); POTH, Ulrich, 59399 Olfen (DE); BRINK, Norbert, 59514 Welver (DE); SCHECKREITER, Dirk, 58239 Schwerte (DE)
(74) Vertreter: thyssenkrupp Intellectual Property GmbH
(86) Internationale Anmeldenummer: PCT/EP2015/074665
(87) Internationale Veröffentlichungsnummer: WO 2016/066558

(56) Entgegenhaltungen:
- CN-U- 201 990 641
- DE-A1- 2 205 747
- DE-A1- 4 012 141
- GB-A- 885 673

## Beschreibung

Die Erfindung betrifft ein Verfahren und eine Vorrichtung zur Behandlung von Kokereigas, bei dem Naphthalin aus dem vorzugsweise verdichteten Kokereigas mit einer geeigneten Flüssigkeit in einem Wäscher ausgewaschen wird, wodurch die in dem Kokereigas verbleibende Restmenge an Naphthalin verringert wird. Dies ermöglicht es, die nachfolgenden Aufbereitungsschritte, insbesondere die Waschschritte bei geringerer Temperatur durchzuführen, ohne dass dadurch Naphthalin auskondensiert. Infolge der geringeren Temperatur wird die Effizienz der Waschschritte deutlich verbessert.

Bei der Behandlung von Kokereigas wird das Koksofengas üblicherweise von Ammoniak befreit und entschwefelt. Die dazu eingesetzten kombinierten oder auch getrennten Wäscher sind meistens auf der Druckseite der Gasbehandlung angeordnet. Dies bedeutet, dass das Kokereigas durch einen Verdichter auf den benötigten Druck verdichtet wird, wodurch sich das Kokereigas entsprechend erhitzt. Durch diese Verdichtung steigt die Temperatur des Kokereigases relativ um etwa 20°C an. Um diese Temperaturdifferenz wird das Kokereigas anschließend in einem Schlusskühler wieder abgekühlt, wobei der Schlusskühler in einer Waschkolonne integriert sein kann.

In einem vorgeschalteten Schritt wird das verdichtete Kokereigas in einem Vorkühler gekühlt, um insbesondere Naphthalin und teerige Bestandteile, welche in dem Kokereigas enthalten sind, auszukondensieren. Die Temperatur, bei welcher die Kondensation von Naphthalin und teerigen Bestandteilen erfolgt (Taupunkt), ist regional unterschiedlich und variiert von Anlage zu Anlage. Bei diesen Verfahren ist die Austrittstemperatur am Vorkühler die kritische Taupunkttemperatur, welche in den nachfolgenden Verfahrensschritten nicht mehr unterschritten werden darf, um die Kondensation von Naphthalin und/oder Wasser während dieser nachfolgenden Verfahrensschritte zu verhindern.

Die in den nachgeschalteten Wäschern erfolgenden Reinigungsschritte (Wäschen) sind temperatursensitiv. Üblicherweise ist die Effizienz einer Wäsche umso größer, je tiefer die Temperatur ist. Daher wird grundsätzlich versucht, die nachgeschalteten Wäscher möglichst dicht oberhalb des jeweiligen Taupunkts von Naphthalin zu betreiben, um einerseits die Effizienz der Waschstufe zu optimieren, andererseits jedoch auch die Kondensation von Naphthalin zu vermeiden.

Durch Störungen im Betrieb wird diese Taupunkttemperatur in den Wäschen häufig unbeabsichtigt unterschritten. Es kommt dann zur Kondensation von Naphthalin und somit zu Verstopfungen in den Wäschern. Damit diese Störungen nicht zu häufig auftreten, werden die Wäscher üblicherweise bei einer Temperatur betrieben, welche einige Grad oberhalb der Taupunkttemperatur liegt. Die gewählte Temperaturdifferenz bietet dann einen gewissen Sicherheitsabstand, wodurch geringfügige Temperaturschwankungen toleriert werden, ohne dass es zur Kondensation von Naphthalin kommt. Gleichzeitig resultiert aus dieser höheren Temperatur in den Wäschern jedoch eine Verschlechterung der Effizienz der Wäsche.

Die Waschkolonnen sind üblicherweise mit einem integrierten Schlusskühler ausgerüstet, in welchem das Kokereigas relativ um die Temperaturdifferenz abkühlt wird, um welche es zuvor bei der Verdichtung erwärmt wurde. Die Austrittstemperatur am Schlusskühler wird üblicherweise auf eine Temperatur eingestellt, welche 3°C bis 5°C relativ oberhalb der Taupunkttemperatur von Naphthalin liegt, d.h. welche 3°C bis 5°C relativ oberhalb der Austrittstemperatur am Vorkühler. Trotz dieser Temperaturdifferenz treten jedoch in der Praxis immer wieder Unterschreitungen der Taupunkttemperatur auf, wodurch die Wäscher schnell verstopfen und sich ein nicht akzeptabler Druckverlust einstellt sowie eine Verschlechterung der Wäsche resultiert.

DE4012141 A1 betrifft ein Verfahren zur Vorkühlung von Kokereirohgas und zur Desorption von Wässern, d. h. Waschwässern und Kondensaten der Kokerei, mit Hilfe von heissem Kokereirohgas.

GB885673 A, DE2205747 A1 und CN201990641 U offenbaren weitere Verfahren und Vorrichtungen zur Behandlung von Kokereigas.

Es besteht ein Bedarf an Verfahren zur Behandlung von Kokereigas, welche diese Nachteile des Standes der Technik überwinden. Der Erfindung liegt somit die Aufgabe zugrunde, ein Verfahren und eine Vorrichtung zur Behandlung von Kokereigas bereitzustellen, welche Vorteile gegenüber den Verfahren und Vorrichtungen des Standes der Technik hat. Das unerwünschte Auskondensieren von Naphthalin sollte wirksam unterdrückt und die Effizienz der Gaswäschen optimiert werden.

Diese Aufgabe wird durch den Gegenstand der Patentansprüche gelöst.

Die Erfindung kombiniert einen Wäscher, welcher bevorzugt als Waschölkolonne ausgestaltet ist, mit einem Schlusskühler, erfindungsgemäß in einer gemeinsamen Kolonne. Die Waschflüssigkeit umfasst vorzugsweise Waschöl, welches erfindungsgemäß teilweise als Waschölkreislauf geführt und bevorzugt mit abgetriebenem Waschöl aus einer nachgeschalteten Benzolwäsche betrieben wird. Der Waschölkreislauf wird bevorzugt im unteren Bett der gemeinsamen Kolonne betrieben. Als Frischöl wird dabei bevorzugt nur ein bestimmter Make-up-Strom des abgetriebenen Waschöls zugegeben. Bevorzugt wird die gleiche Menge dem Kreislauf entnommen und dem angereicherten Öl des Waschölprozesses zugeführt. So wird erreicht, dass die Taupunkttemperatur vom Naphthalin durch das Waschöl, in dem sich Naphthalin löst, hinreichend tief abgesenkt wird.

Die Folgestufe ist die eigentliche Schlusskühlstufe. Diese wird bevorzugt mit einer wässrigen Lösung betrieben und es erfolgt ein Make-up durch Abtreiberabwasser oder ähnlichem. Der Kreislauf wird gekühlt und somit auch das durchtretende Kokereigas. Durch die vorgeschaltete Waschölkolonne zum Abtrennen von Naphthalin wird der Taupunkt des in dem Kokereigas zurückbleibenden Naphthalins so weit herunter gesetzt, dass in der Schlusskühlstufe die Kühlung auch sehr weit unterhalb der Austrittstemperatur am Vorkühler erfolgen kann, ohne dass Naphthalin auskondensiert. Ggf. kondensierendes Wasser bleibt in der wässrigen Kreislauflösung. Eine nachfolgende effektive Wäsche von Ammoniak und/oder Schwefelwasserstoff bei tiefer Temperatur ist durch die vorgeschaltete Waschölkolonne somit auch selbst bei sehr hoher Austrittstemperatur am Vorkühler möglich.

Ein erster Aspekt der Erfindung betrifft ein Verfahren zur Behandlung von Kokereigas gemäß Anspruch 1.

In Schritt (a) des erfindungsgemäßen Verfahren wird das Kokereigas auf einen erhöhten Druck verdichtet. Bevorzugt liegt der Druck des Kokereigases nach dem Verdichten im Bereich von 100 bis 500 mbar, bevorzugter 200 bis 400 mbar und insbesondere ca. 300 mbar.

In Schritt (b) des erfindungsgemäßen Verfahren wird das Kokereigas mit einem Vorkühler und einem geeigneten Kühlmedium abgekühlt.

Bevorzugt wird das Kokereigas in Schritt (b) auf eine Temperatur Tᵥ abgekühlt, bei welcher ein Teil des in dem Kokereigas enthaltenen Naphthalins sowie ggf. enthaltene teerige Bestandteile auskondensieren, und wobei anschließend dieses auskondensierte Naphthalin sowie die ggf. auskondensierten teerigen Bestandteile von dem Kokereigas abgetrennt werden. Geeignete Abtrennvorrichtungen sind einem Fachmann bekannt. Typischerweise liegt die Temperatur Tᵥ, welche bevorzugt am Austritt des Vorkühlers gemessen wird, im Bereich von 20 bis 35°C, bevorzugter 25 bis 30°C.

Bevorzugt wird durch das Abkühlen des Kokereigases in Schritt (b) dessen Konzentration an Naphthalin relativ um mindestens 10 Gew.-%, bevorzugter um mindestens 20 Gew.-%, noch bevorzugter um mindestens 30 Gew.-%, am bevorzugtesten um mindestens 40 Gew.-% und insbesondere um mindestens 50 Gew.-% vermindert, jeweils in Bezug auf diejenige Konzentration an Naphthalin, welche das Kokereigas unmittelbar vor der Durchführung von Schritt (b) aufweist.

In Schritt (c) des erfindungsgemäßen Verfahrens wird Naphthalin aus dem Kokereigas mit einer geeigneten Flüssigkeit in einem Wäscher ausgewaschen. Dazu wird das Kokereigas mit der Flüssigkeit in dem Wäscher in Kontakt gebracht, vorzugsweise im Gegenstrom. Bevorzugt durchströmt das Kokereigas den Wäscher von unten nach oben und die Flüssigkeit wird durch den Wäscher in Gegenrichtung, d.h. von oben nach unten geleitet. Geeignete Wäscher sind einem Fachmann bekannt. Der Durchtritt des Kokereigases in den Wäscher erfolgt bevorzugt durch ein flüssigkeitsdichten Kaminboden oder eine ähnliche Vorrichtung.

Bevorzugt wird bei der Durchführung von Schritt (c) des erfindungsgemäßen Verfahrens das Kokereigas nicht gleichzeitig abgekühlt, damit kein Wasser auskondensieren kann. Schritt (c) des erfindungsgemäßen Verfahrens wird bevorzugt bei einer Temperatur durchgeführt, welche mindestens so hoch ist wie die Temperatur des Kokereigases am Austritt des Vorkühlers in Schritt (b). Meistens wird auch hier ein Sicherheitsabstand von bis zu plus 3°C gewählt.

Bevorzugt umfasst die in Schritt (c) des erfindungsgemäßen Verfahrens eingesetzte Flüssigkeit ein Waschöl, beispielsweise Biodiesel oder ein teerbasiertes Waschöl. Geeignete Flüssigkeiten bzw. Waschöle sind einem Fachmann bekannt. In einer besonders bevorzugten Ausführungsform des erfindungsgemäßen Verfahrens wird als Flüssigkeit ein solches Waschöl eingesetzt, welches auch zur Behandlung von Kokereigas für andere Zwecke eingesetzt wird, bevorzugt zur Abtrennung von BTX Aromaten (Benzol, Toluol, Xylol).

Erfindungsgemäß wird ein Teil der in Schritt (c) eingesetzten Flüssigkeit im Kreislauf geführt. Besonders bevorzugt wird dabei frische Flüssigkeit vorzugsweise kontinuierlich in den Kreislauf eingespeist und die entsprechende Menge an Flüssigkeit vorzugsweise aus dem Kreislauf ausgeschleust. Da sich Naphthalin und ggf. auch andere Bestandteile des Kokereigases in der Flüssigkeit lösen, wird so gewährleistet, dass Naphthalin ausgeschleust wird und sich nicht im Kreislauf über eine bestimmte Konzentration hinaus anreichert. Bevorzugt liegt der relative Massenstrom von frischer Flüssigkeit zu im Kreislauf geführter Flüssigkeit im Bereich von 1:1000 bis 1:10, bevorzugter 1:100 bis 1:10.

Bevorzugt wird durch das Auswaschen von Naphthalin aus dem Kokereigas in Schritt (c) dessen Konzentration an Naphthalin relativ um mindestens 10 Gew.-%, bevorzugter um mindestens 20 Gew.-%, noch bevorzugter um mindestens 30 Gew.-%, am bevorzugtesten um mindestens 40 Gew.-% und insbesondere um mindestens 50 Gew.-% vermindert, jeweils in Bezug auf diejenige Konzentration an Naphthalin, welche das Kokereigas unmittelbar vor der Durchführung von Schritt (c) aufweist.

In Schritt (d) des erfindungsgemäßen Verfahrens wird das Kokereigas mit einem geeigneten Kühlmedium in einem Schlusskühler abgekühlt, vorzugsweise zur Verbesserung der Effizienz des nachfolgenden Auswaschens von Ammoniak und/oder Schwefelwasserstoff. Die Abkühlung kann mit Hilfe eines oder mehrerer Wärmetauscher erfolgen. Geeignete Vorrichtungen sind einem Fachmann bekannt.

Bevorzugt umfasst das in Schritt (d) eingesetzte Kühlmedium Abtreiberabwasser.

Bevorzugt wird ein Teil des in Schritt (d) eingesetzten Kühlmediums im Kreislauf geführt. Besonders bevorzugt wird dabei frisches Kühlmedium vorzugsweise kontinuierlich in den Kreislauf eingespeist und die entsprechende Menge an Kühlmedium vorzugsweise aus dem Kreislauf ausgeschleust. Da das Kühlmedium Wärme aus dem Kokereigas aufnimmt, wird so gewährleistet, dass Wärme abgeführt wird und sich nicht im Kreislauf über eine bestimmte Temperatur hinaus anreichert. Bevorzugt liegt der relative Massenstrom von frischem Kühlmedium zu im Kreislauf geführtem Kühlmedium im Bereich von 1:1000 bis 1:10, bevorzugter 1:100 bis 1:10.

Erfindungsgemäß wird das Kokereigas in Schritt (b) auf eine Temperatur T_{V} und in Schritt (d) auf eine Temperatur T_{S} abgekühlt, wobei T_{S} < T_{V}. Bevorzugt beträgt die relative Temperaturdifferenz zwischen der Temperatur T_{S} und der Temperatur T_{V} mindestens 1°C, bevorzugter mindestens 2°C, noch bevorzugter mindestens 3°C, am bevorzugtesten mindestens 4°C und insbesondere mindestens 5°C. Bei Wäschen, welche mit Koksgaseingangstemperaturen von größer 30°C betrieben werden, kann die T_{S} zu T_{V} auch noch größer sein (bis zu 10°C).

Bevorzugt liegt die Temperatur T_{S}, welche bevorzugt am Austritt des Schlusskühlers gemessen wird, unterhalb der Taupunkttemperatur von Naphthalin, welches dieses im Kokereigas unter den gegebenen Bedingungen am Austritt des Vorkühlers hat. Verfahren zur Bestimmung der Taupunkttemperatur unter den gegebenen Bedingungen sind einem Fachmann bekannt. Dieses Unterschreiten der Taupunkttemperatur von Naphthalin, welches dieses im Kokereigas unter den gegebenen Bedingungen am Austritt des Vorkühlers hat, ist erfindungsgemäß möglich, weil durch Schritt (c) des erfindungsgemäßen Verfahrens die Konzentration des Naphthalins in dem Kokereigas reduziert wird und sich der Taupunkt dementsprechend zu tieferen Temperaturen verschiebt.

In Schritt (e) des erfindungsgemäßen Verfahrens werden Ammoniak und/oder Schwefelwasserstoff aus dem Kokereigas mit einer geeigneten weiteren Flüssigkeit in einem weiteren Wäscher ausgewaschen. Dazu wird das Kokereigas mit der weiteren Flüssigkeit in dem weiteren Wäscher in Kontakt gebracht, vorzugsweise im Gegenstrom. Bevorzugt durchströmt das Kokereigas den weiteren Wäscher von unten nach oben und die weitere Flüssigkeit wird durch den weiteren Wäscher in Gegenrichtung, d.h. von oben nach unten geleitet. Geeignete weitere Flüssigkeiten sowie geeignete weitere Wäscher sind einem Fachmann bekannt.

Erfindungsgemäß werden Schritt (c) und Schritt (d) in einer gemeinsamen Kolonne durchgeführt, welche den Wäscher und den Schlusskühler umfasst, wobei der Schlusskühler bevorzugt oberhalb des Wäschers angeordnet ist und wobei das Kokereigas die gemeinsame Kolonne bevorzugt von unten nach oben durchströmt. Bevorzugt wird zusätzlich auch Schritt (e) des erfindungsgemäßen Verfahrens in der gemeinsamen Kolonne durchgeführt, welche zusätzlich den weiteren Wäscher umfasst. Dabei ist der weitere Wäscher bevorzugt oberhalb des Schlusskühlers angeordnet, so dass in der gemeinsamen Kolonne, wenn sie von dem Kokereigas von unten nach oben durchströmt wird, die Schritte (c), (d) und (e) des erfindungsgemäßen Verfahrens zeitlich nacheinander erfolgen.

Bevorzugt werden Schritte (a) bis (e) des erfindungsgemäßen Verfahrens in alphabetischer Reihenfolge durchgeführt.

Ein weiterer Aspekt der Erfindung betrifft eine Vorrichtung zur Behandlung von Kokereigas. Alle bevorzugten Ausführungsformen, welche vorstehend im Zusammenhang mit dem erfindungsgemäßen Verfahren beschrieben wurden, gelten entsprechend auch analog für die erfindungsgemäße Vorrichtung.

Die erfindungsgemäße Vorrichtung zur Behandlung von Kokereigas, welches Naphthalin und ggf. teerige Bestandteile enthält, ist bevorzugt zur Abtrennung von NH₃ und/oder von H₂S konfiguriert und ist in Anspruch 7 definiert.

Erfindungsgemäß sind der Wäscher und der Schlusskühler in einer gemeinsamen Kolonne angeordnet. Besonders bevorzugt ist dabei der Schlusskühler oberhalb des Wäschers angeordnet.

Bevorzugt ist der weitere Wäscher zusätzlich in der gemeinsamen Kolonne angeordnet. Besonders bevorzugt ist dabei der weitere Wäscher oberhalb des Schlusskühlers angeordnet.

Ein weiterer Aspekt der Erfindung betrifft die Verwendung der vorstehend beschriebenen, erfindungsgemäßen Vorrichtung in dem vorstehend beschriebenen, erfindungsgemäßen Verfahren. Alle bevorzugten Ausführungsformen, welche vorstehend im Zusammenhang mit dem erfindungsgemäßen Verfahren oder der erfindungsgemäßen Vorrichtung beschrieben wurden, gelten entsprechend auch analog für die erfindungsgemäße Verwendung.

Die Erfindung hat u.a. den Vorteil, dass die Betriebssicherheit deutlich erhöht wird, weil weniger Verschmutzung durch auskondensierendes Naphthalin auftritt. Darüber hinaus wird die Gaswäsche verbessert, d.h. die Abtrennung von Ammoniak und/oder Schwefelwasserstoff, weil ein deutlich tieferes Temperaturniveau gefahren werden kann. Da bei dem erfindungsgemäßen Verfahren das abgetriebene Waschöl aus einer nachgelagerten Benzolwäsche eingesetzt werden kann, sind keine zusätzlichen Chemikalien zur Durchführung des erfindungsgemäßen Verfahrens erforderlich. Diese nachfolgende Benzolwäsche wird darüber hinaus optimiert, da die Benzolkonzentration für die Gaswäsche verschoben wird. Ferner können durch die Integration des Wäschers, des Schlusskühlers sowie ggf. des weiteren Wäschers in einer gemeinsamen Kolonne Investitionskosten eingespart werden. Außerdem kann durch den nachgeschalteten Schlusskühler verhindert werden, dass Ölmitrisse in den Waschprozess geleitet werden. Solche Ölmitrisse verbleiben ggf. im Kreislauf des Kühlmittels und werden schließlich damit ausgeschleust.

Nicht erfindungsgemäße Ausführungsformen werden nachfolgend anhand der Figuren 1 und 2 erläutert. Ausführungsformen der Erfindung werden nachfolgend anhand der Figuren 3 bis 4 erläutert. Ein Fachmann erkennt, dass diese Ausführungsformen schematisch dargestellt sind und es erfindungsgemäß möglich ist, dass einige der in den Figuren dargestellten Merkmale weggelassen und/oder andere Merkmale, welche nicht dargestellt sind, zusätzlich verwirklicht sein können.

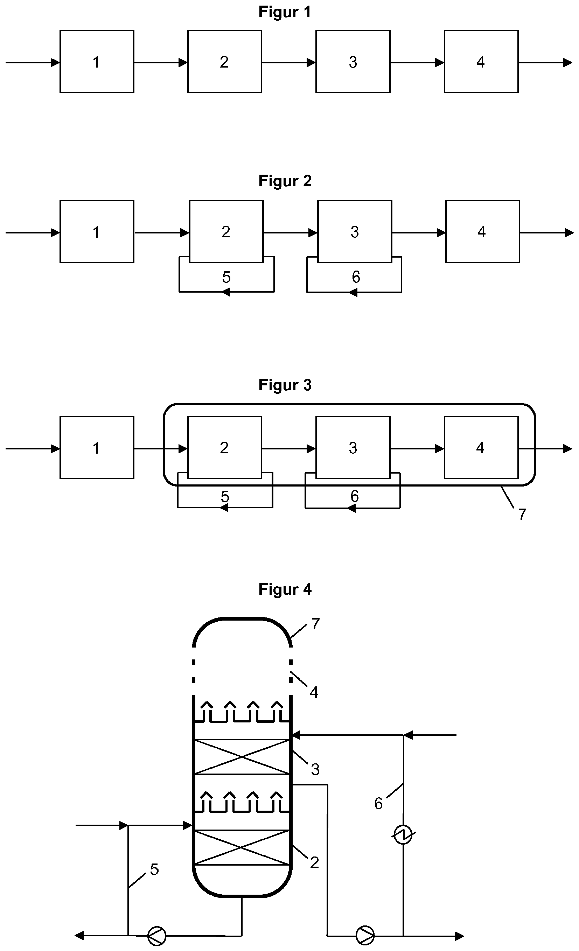

Figur 1 zeigt ein Fließschema, wonach das ggf. zunächst verdichtete Kokereigas einem Vorkühler (1) zugeführt und darin abgekühlt wird. Durch diese Abkühlung wird bevorzugt das Auskondensieren von Naphthalin bewirkt, wodurch der Restgehalt an Naphthalin in dem Kokereigas verringert wird. Anschließend wird das abgekühlte Kokereigas in einen Wäscher (2) überführt, in dem Naphthalin mit Hilfe einer geeigneten Flüssigkeit ausgewaschen und dadurch der Restgehalt an Naphthalin in dem Kokereigas weiter verringert wird. Das Kokereigas mit einem entsprechend verminderten Restgehalt an Naphthalin wird dann in einem Schlusskühler (3) mit Hilfe eines geeigneten Kühlmediums abgekühlt. Das abgekühlte Kokereigas wird dann in einen weiteren Wäscher (4) überführt, in dem Ammoniak und/oder Schwefelwasserstoff mit Hilfe einer geeigneten weiteren Flüssigkeit ausgewaschen werden.

Figur 2 zeigt eine nicht erfindungsgemäße Ausführungsform des Fließschemas gemäß Figur 1. Dabei wird die im Wäscher (2) eingesetzte Flüssigkeit zum Teil in einem Kreislauf (5) geführt. Außerdem wird das in Schlusskühler (3) eingesetzte Kühlmedium zum Teil in einem Kreislauf (6) geführt.

Figur 3 eine bevorzugte Ausführungsform des Fließschemas gemäß Figuren 1 und 2. Dabei sind der Wäscher (2), der Schlusskühler (3) sowie der weitere Wäscher (4) in einer gemeinsamen Kolonne (7) angeordnet.

Figur 4 zeigt eine bevorzugte Ausführungsform der gemeinsamen Kolonne (7), in welcher der Wäscher (2), der Schlusskühler (3) sowie der weitere Wäscher (4) angeordnet sind. Der weitere Wäscher (4) ist nicht vollständig dargestellt, was durch die gestrichelte Linie angedeutet wird. Dabei wird die im Wäscher (2) eingesetzte Flüssigkeit zum Teil in einem Kreislauf (5) geführt. Außerdem wird das in Schlusskühler (3) eingesetzte Kühlmedium zum Teil in einem Kreislauf (6) geführt.

### Bezugszeichenliste:

1 - Vorkühler
2 - Wäscher
3 - Schlusskühler
4 - weiterer Wäscher
5 - Kreislauf für Flüssigkeit
6 - Kreislauf für Kühlmedium
7 - gemeinsame Kolonne

## Patentansprüche

1. Ein Verfahren zur Behandlung von Kokereigas, welches Naphthalin enthält, umfassend die Schritte
(a) Verdichten des Kokereigases;
(b) Abkühlen des Kokereigases in einem Vorkühler (1);
(c) Auswaschen von Naphthalin aus dem Kokereigas mit einer geeigneten Flüssigkeit in einem Wäscher (2);
(d) Abkühlen des Kokereigases mit einem geeigneten Kühlmedium in einem Schlusskühler (3); und
(e) Auswaschen von Ammoniak und/oder Schwefelwasserstoff aus dem Kokereigas mit einer geeigneten weiteren Flüssigkeit in einem weiteren Wäscher (4),
wobei das Kokereigas in Schritt (b) auf eine Temperatur Tv und in Schritt (d) auf eine Temperatur Ts abgekühlt wird, wobei Ts<Tv,
wobei Schritt (c) und Schritt (d) in einer gemeinsamen Kolonne (7) durchgeführt werden, welche den Wäscher (2) und den Schlusskühler (3) umfasst, und
wobei ein Teil der in Schritt (c) eingesetzten Flüssigkeit im Kreislauf (5) geführt wird.

2. Das Verfahren nach Anspruch 1, wobei das Kokereigas in Schritt (b) auf eine Temperatur Tv abgekühlt wird, bei welcher ein Teil des in dem Kokereigas enthaltenen Naphthalins auskondensiert, und wobei dieses auskondensierte Naphthalin von dem Kokereigas abgetrennt wird.

3. Das Verfahren nach Anspruch 1 oder 2, wobei zusätzlich Schritt (e) in der gemeinsamen Kolonne (7) durchgeführt wird, welche zusätzlich den weiteren Wäscher (4) umfasst.

4. Das Verfahren nach einem der vorstehenden Ansprüche, wobei die in Schritt (c) eingesetzte Flüssigkeit ein Waschöl umfasst.

5. Das Verfahren nach einem der vorstehenden Ansprüche, wobei das in Schritt (d) eingesetzte Kühlmedium Abtreiberabwasser umfasst.

6. Das Verfahren nach einem der vorstehenden Ansprüche, wobei ein Teil des in Schritt (d) eingesetzten Kühlmediums im Kreislauf (6) geführt wird.

7. Eine Vorrichtung zur Behandlung von Kokereigas, welches Naphthalin enthält, umfassend die miteinander in Wirkverbindung stehenden Komponenten
(A) einen Verdichter konfiguriert zum Verdichten des Kokereigases;
(B) einen Vorkühler (1) konfiguriert zum Abkühlen des Kokereigases auf eine Temperatur Tv;
(C) einen Wäscher (2) konfiguriert zum Auswaschen von Naphthalin aus dem Kokereigas mit einer geeigneten Flüssigkeit; und konfiguriert einen Teil der eingesetzten Flüssigkeit im Kreislauf (5) zu führen,
(D) einen Schlusskühler (3) konfiguriert zum Abkühlen des Kokereigases mit einem geeigneten Kühlmedium auf eine Temperatur Ts < Tv; und
(E) einen weiteren Wäscher (4) konfiguriert zum Auswaschen von Ammoniak und/oder Schwefelwasserstoff aus dem Kokereigas mit einer geeigneten weiteren Flüssigkeit, wobei der Wäscher (2) und der Schlusskühler (3) in einer gemeinsamen Kolonne (7) angeordnet sind.

8. Die Vorrichtung nach Anspruch 7, wobei der Schlusskühler (3) oberhalb des Wäschers (2) angeordnet ist.

9. Die Vorrichtung nach Anspruch 7 oder 8, wobei der weitere Wäscher (4) zusätzlich in der gemeinsamen Kolonne (7) angeordnet ist.

10. Die Vorrichtung nach Anspruch 9, wobei der weitere Wäscher (4) oberhalb des Schlusskühlers (3) angeordnet ist.

11. Verwendung der Vorrichtung nach einem der Ansprüche 7 bis 10 in dem Verfahren nach einem der Ansprüche 1 bis 6.

## Claims

1. Process for treatment of coke oven gas containing naphthalene, comprising the steps of
(a) compressing the coke oven gas;
(b) cooling the coke oven gas in a pre-cooler (1);
(c) scrubbing naphthalene out of the coke oven gas with a suitable liquid in a scrubber (2);
(d) cooling the coke oven gas with a suitable cooling medium in an end-cooler (3); and
(e) scrubbing ammonia and/or hydrogen sulfide out of the coke oven gas with a suitable further liquid in a further scrubber (4),
wherein the coke oven gas is cooled to a temperature T_{V} in step (b) and to a temperature T_{S} in step (d), wherein T_{S} < T_{V},
wherein step (c) and step (d) are performed in a common column (7) which comprises the scrubber (2) and the end-cooler (3), and
wherein a portion of the liquid employed in step (c) is recirculated (5).

2. Process according to Claim 1, wherein in step (b) the coke oven gas is cooled to a temperature Tᵥ at which a portion of the naphthalene present in the coke oven gas condenses out and wherein this condensed-out naphthalene is removed from the coke oven gas.

3. Process according to Claim 1 or 2, wherein in addition step (e) is performed in the common column (7) which also comprises the further scrubber (4).

4. Process according to any of the preceding claims, wherein the liquid employed in step (c) comprises a scrubbing oil.

5. Process according to any of the preceding claims, wherein the cooling medium employed in step (d) comprises stripper water.

6. Process according to any of the preceding claims, wherein a portion of the cooling medium employed in step (d) is recirculated (6).

7. Apparatus for treatment of coke oven gas containing naphthalene, comprising the following operatively connected components
(A) a compressor configured for compressing the coke oven gas;
(B) a pre-cooler (1) configured for cooling the coke oven gas to a temperature Tᵥ;
(C) a scrubber (2) configured for scrubbing naphthalene out of the coke oven gas with a suitable liquid; and configured for recirculating (5) a portion of the liquid employed;
(D) an end-cooler (3) configured for cooling the coke oven gas with a suitable cooling medium to a temperature Tₛ<Tᵥ; and
(E) a further scrubber (4) configured for scrubbing ammonia and/or hydrogen sulfide out of the coke oven gas with a suitable further liquid, wherein the scrubber (2) and the end-cooler (3) are arranged in a common column (7) .

8. Apparatus according to Claim 7, wherein the end-cooler (3) is arranged above the scrubber (2).

9. Apparatus according to Claim 7 or 8, wherein the further scrubber (4) is also arranged in the common column (7) .

10. Apparatus according to Claim 9, wherein the further scrubber (4) is arranged above the end-cooler (3).

11. Use of the apparatus according to any of Claims 7 to 10 in the process according to any of Claims 1 to 6.

## Revendications

1. Procédé de traitement de gaz de cokerie, qui contient du naphtalène, comprenant les étapes suivantes:
(a) comprimer le gaz de cokerie;
(b) refroidir le gaz de cokerie dans un refroidisseur primaire (1);
(c) laver le naphtalène hors du gaz de cokerie avec un liquide approprié dans un laveur (2);
(d) refroidir le gaz de cokerie avec un milieu réfrigérant dans un refroidisseur final (3); et
(e) laver l'ammoniac et/ou le sulfure d'hydrogène hors du gaz de cokerie avec un autre liquide approprié dans un autre laveur (4),
dans lequel on refroidit le gaz de cokerie à l'étape (b) à une température Tv et à l'étape (d) à une température Ts, avec Ts<Tv,
dans lequel on exécute l'étape (c) et l'étape (d) dans une colonne commune (7) qui comprend le laveur (2) et le refroidisseur final (3), et
dans lequel on conduit une partie du liquide utilisé à l'étape (c) dans le circuit (5).

2. Procédé selon la revendication 1, dans lequel on refroidit le gaz de cokerie à l'étape (b) à une température Tv, à laquelle une partie du naphtalène contenu dans le gaz de cokerie se condense, et dans lequel on élimine ce naphtalène condensé hors du gaz de cokerie.

3. Procédé selon une revendication 1 ou 2, dans lequel on exécute en plus l'étape (e) dans la colonne commune (7), qui comprend en plus l'autre laveur (4).

4. Procédé selon l'une quelconque des revendications précédentes, dans lequel le liquide utilisé à l'étape (c) comprend une huile de lavage.

5. Procédé selon l'une quelconque des revendications précédentes, dans lequel le milieu réfrigérant utilisé à l'étape (d) comprend des eaux résiduaires d'une colonne de strippage.

6. Procédé selon l'une quelconque des revendications précédentes, dans lequel une partie du milieu réfrigérant utilisé à l'étape (d) est conduite dans le circuit (6).

7. Dispositif de traitement de gaz de cokerie, qui contient du naphtalène, comprenant les composants suivants en liaison active les uns avec les autres:
(A) un compresseur configuré pour comprimer le gaz de cokerie;
(B) un refroidisseur primaire (1) pour refroidir le gaz de cokerie à une température Tv;
(C) un laveur (2) configuré pour laver du naphtalène hors du gaz de cokerie avec un liquide approprié; et configuré pour conduire une partie du liquide utilisé dans le circuit (5);
(D) un refroidisseur final (3) configuré pour refroidir le gaz de cokerie avec un milieu réfrigérant approprié à une température Ts<Tv; et
(E) un autre laveur (4) configuré pour laver de l'ammoniac et/ou du sulfure d'hydrogène hors du gaz de cokerie avec un autre liquide approprié, dans lequel le laveur (2) et le refroidisseur final (3) sont disposés dans une colonne commune (7).

8. Dispositif selon la revendication 7, dans lequel le refroidisseur final (3) est disposé au-dessus du laveur (2) .

9. Dispositif selon une revendication 7 ou 8, dans lequel l'autre laveur (4) est disposé en plus dans la colonne commune (7).

10. Dispositif selon la revendication 9, dans lequel l'autre laveur (4) est disposé au-dessus du refroidisseur final (3).

11. Utilisation du dispositif selon l'une quelconque des revendications 7 à 10 dans le procédé selon l'une quelconque des revendications 1 à 6.
